# EUROPEAN PATENT SPECIFICATION

(11) **EP 4 513 146 B1**
(45) Date of publication and mention of the grant of the patent: **25.06.2025**
(21) Application number: 23192499.4
(22) Date of filing: 21.08.2023
(51) Int. Cl.: G01D 5/14

(54) **ROTARY SENSOR**
DREHSENSOR
CAPTEUR ROTATIF

(43) Date of publication of application: 26.02.2025
(73) Proprietor: elobau GmbH & Co. KG, 88299 Leutkirch im Allgäu (DE)
(72) Inventor: Butscher, Roland, 88316 Isny (DE)
(74) Representative: Knöner, Gregor

(56) References cited:
- EP-A1- 3 244 167
- EP-A1- 3 543 657
- US-A- 5 831 596
- US-A1- 2003 178 290
- US-A1- 2015 253 876
- US-A1- 2015 332 831

## Description

### FIELD OF THE INVENTION

The present application relates to a rotary sensor comprising a magnet arrangement and to a method of assembling a rotary sensor.

### BACKGROUND

Rotary sensors can be used for angular or rotational measurements. Hall-sensors may for example be employed for contactless angular measurements which are particularly suitable for harsh environments. Conventionally, a disc or ring magnet having a number of poles is mounted to the rotating equipment and the rotation of the magnetic field is detected by the Hall-sensor. To account for external disturbing magnetic fields, plural sensor elements including Hall-sensor pairs may be employed, which can be provided on a single integrated circuit.

As an example, ring magnets may be employed which have four sectors, each sector being magnetized axially, wherein neighboring sectors have an opposite direction of magnetization. Two north poles and two south poles may accordingly be provided on each axial face of the ring magnet. Such magnets are generally produced by using injection molding of magnetizable material mixed with thermoplastic material (with a filling degree of up to 85%).

A Hall-sensor can be arranged opposite to the annular axial face of such ring magnet at a predefined distance thereto. The sensor element is generally offset in a radial direction to be exposed to a relatively large z-component of the magnetic field, in particular of the magnetic flux density Bz. In such configuration, a radial displacement, for example due to mechanical drift, mechanical wear, or mechanical vibrations, may result in a deviation of an angle of rotation measured by the Hall-sensor. To reduce such deviation, the document EP 3 543 657 A1 suggests the providing of grooves between the sectors of the ring magnet, which is formed of a single monolithic piece of material. The grooves provide a constant magnetic field gradient in a central region around the axis of the magnet. Such shaping of the magnetic field reduces the angular position error.

It is difficult to make such rotary sensor more compact while maintaining a good measuring accuracy. To be robust against disturbing magnetic fields, the ring magnet has to maintain a minimum flux density, which requires particularly large ring magnets when produced with the conventional injection molding methods. A magnetization of the magnetic material may further become difficult or may not even be possible below a certain size of the ring magnet.

The document EP 3 244 167 A1 describes a magnetic component for a Hall effect sensor of an electric supercharger of a combustion engine. The magnetic component includes four magnets distributed around the axis of a body. Additional magnets are provided for increasing the rising fronts of magnet sensor signals to improve the accuracy of detecting the rotation speed above 10,000 rpm.

The document US 5,831,596 A describes a joystick controller having a resilient arm with a tube and a handle. The arm flexes around a pivot point, wherein a position of a magnet mounted to the tube affects an output of Hall effect probes.

The document US 2003/0178290 A1 describes an operating unit with a rotary toggle. On the rotary toggle, five signaling magnets are provided that migrate over a Hall sensor to generate signals from which a rotation can be characterized.

The document US 2015/0253876 A1 discloses a rotary actuator with a coding element having four permanent magnets each being provided as quarter ring section to form a ring, wherein the ring sections are magnetized in a direction that lies in the ring plane.

### SUMMARY

Accordingly, there is a need to mitigate at least some of the drawbacks mentioned above and to provide an improved rotary sensor, in particular a more compact sensor that provides an improved measuring accuracy.

This need is met by the features of the independent claims. The dependent claims describe embodiments of the invention.

According to an embodiment of the invention, a rotary sensor comprising a magnet arrangement configured to generate a magnetic field is provided. The magnet arrangement comprises at least four distinct and spatially separate permanent magnets, wherein the at least four permanent magnets are arranged circumferentially about a rotation axis extending in an axial direction. The magnet arrangement is configured to be non-rotatably mounted to a component a rotation of which about the rotation axis is to be measured. The rotary sensor further comprises at least one magnetic field sensor configured and arranged to detect a rotation of the magnetic field generated by the magnet arrangement upon rotation of the magnet arrangement, e.g. due to rotation of the component.

Such magnet arrangement may allow the rotary sensor to become more compact. By providing distinct permanent magnets in the magnet arrangement, the degree of magnetization and thus the magnetic flux density that can be generated by the magnet arrangement may be increased significantly. Furthermore, such distinct permanent magnets may be made more compact and may be arranged closer to, e.g., a shaft of the component, so that the size required by the magnet arrangement may be reduced. Mounting of the magnet arrangement to the component may thus be facilitated, as it may be easier to feed the magnet arrangement through a small space or aperture. Contrary to the general perception, it has further been found that with such arrangement, the robustness of the rotary sensor against misalignment between the magnet arrangement and the magnetic field sensor may further be improved. The rotary sensor may thus provide an improved measurement accuracy and may further be more robust against mechanical vibrations and/or mechanical drift, e.g. due to bearing play. Further, by providing a higher magnetic flux density, the rotary sensor may be more robust against disturbing external magnetic fields, such as homogeneous and inhomogeneous magnetic fields.

According to the invention, the magnet arrangement comprises at least four distinct and spatially separate permanent magnets arranged circumferentially about the rotational axis. It may comprise exactly four distinct and spatially separate permanent magnets arranged circumferentially about the rotational axis. In other configurations, it may comprise even more permanent magnets, such as at least six or exactly six, at least eight or exactly eight, or the like. The component may comprise a shaft or protrusion extending in the axial direction, and the magnet arrangement may be mountable to the shaft or protrusion. The magnet arrangement may comprise an inner recess or hole that extends on the rotation axis in the axial direction and that may be configured to receive such shaft (e.g., a shaft end) of the component. Such recess or hole may have a shape adapted to the shape of the shaft or may simply be a bore, e.g. a through-bore or a dead bore. Such recess or hole may be configured to engage the shaft or component in a formfitting manner, e.g. using an interference fit or a loose fit. A non-circular shape of the recess and shaft, a slot and key arrangement, an interference fit, or the like may be provided for ensuring that the magnet arrangement is not rotatable with respect to the component when mounted to the component.

The at least four permanent magnets may be spaced apart from each other in circumferential direction. By providing a spacing between the permanent magnets, robustness against magnetic field sensor displacements and sensor accuracy may further be improved. For example, a distance by which the at least four permanent magnets are spaced apart from each other in circumferential direction may be less than 6 mm, less than 3 mm, less than 2 mm, or less than 1.5 mm. With such spacing, a deviation of an angle measurement by the rotary sensor due to a displacement of the magnetic field sensor may thereby be minimized. It should be clear that the optimal spacing between the neighboring permanent magnets will generally depend on the size of the permanent magnets and may thus be chosen accordingly. The spacing relates to the spacing between the outer perimeter of the permanent magnets, i.e. the minimum distance between the outer surfaces of neighboring permanent magnets.

According to the invention, each permanent magnet has a direction of magnetization that is substantially parallel to the axial direction. Permanent magnets that are neighbors in the circumferential direction have an opposite direction of magnetization. An even number of permanent magnets may thus be provided. Substantially parallel may mean parallel or an angle of less than 10°, 5° or 1° between the respective axes.

Each permanent magnet may for example extend in the axial direction and may have at one axial end a magnetic north pole and at the other axial end a magnetic south pole, by which the direction of magnetization of the permanent magnet is defined.

According to the invention, at an axial end face of the magnet arrangement, north and south poles alternate in circumferential direction.

The permanent magnet may in particular be a bar magnet or a rod magnet, with its magnetic poles on the opposite axial end faces.

Each permanent magnet may have a cylindrical shape, and a cylinder axis of the cylindrical shape may be substantially parallel to the axial direction. Cylinder axis generally refers to the central symmetry axis of a cylinder in height direction. By such arrangement of cylindrical permanent magnets, a compact configuration that at the same time provides a high magnetic flux density and robustness against radial magnet sensor displacements may be provided.

In an embodiment, the at least four permanent magnets may be arranged such that in a cross-sectional plane perpendicular to the axial direction, the perimeter (i.e., the external surface) of each of the at least four permanent magnets abuts the same inner circle. Such symmetric arrangement may improve the homogeneity of the field gradients and may facilitate mounting to a central shaft. The perimeter of the permanent magnets may in particular be tangential to the inner circle. For a cylindrical shape of the magnets, which correspond to a circle in the cross-sectional plane, the circular perimeter of each permanent magnet may thus touch or be tangential to the inner circle. In some implementations, the perimeter of each of the at least four permanent magnets may abut the same outer circle. If the permanent magnets are of the same or similar size and shape, they may abut both, the inner circle and the outer circle.

The inner circle may for example have a diameter of less than 6 mm, less than 4 mm, less than 3.5 mm, or less than 3 mm. A compact rotary sensor may thus be achieved. In particular, such compact size may not be achievable by conventional ring magnets.

The spacing between neighboring permanent magnets may be the same. The arrangement of the permanent magnets in circumferential direction may in particular be rotationally symmetric (e.g., with respect to a 180 degree rotation, i.e. a 2-fold symmetry).

The at least four permanent magnets may have the same or a similar size and shape. The diameter of each permanent magnet may be less than 8 mm, less than 5 mm, or less than 4 mm. An extension in axial direction may be less than 8 mm, less than 5 mm, or less than 4 mm. A compact magnet arrangement and thus a compact rotary sensor may thereby be provided. In some implementations, the diameter and the extension in axial direction of the permanent magnets may be similar or the same.

In an embodiment, a magnetic field sensor is provided in an end-of-shaft configuration. A high measurement accuracy and robustness against external magnetic fields may thereby be achieved.

For example, the at least one magnetic field sensor may comprise at least one Hall-sensor arranged in the axial direction on a side of the magnet element that is opposite to a side on which the magnet element is configured to receive or to be mounted to the component (e.g. to receive a shaft). A sensor element of the Hall-sensor may be offset from the rotation axis in a radial direction that is perpendicular to the axial direction.

It should be clear that a Hall-sensor may comprise one or plural different Hall-sensor elements to measure different directions of the magnetic field and/or to compensate for external magnetic fields. The sensor element of the Hall sensor may be a sensor array. The Hall sensor may comprise 1, 2 or more respective sensor arrays. A sensor array may form a circle, e.g. a Hall plate circle. The center of such Hall plate circle may be offset from the axis in said radial direction, for example by less than 5 mm, less than 3 mm, or less than 2 mm.

The Hall-sensor may be provided as a single chip or single integrated circuit on which a number of Hall-sensor elements is provided. Depending on the arrangement, the Hall-sensor may comprise a vertical Hall-device. The Hall-sensor may in particular be provided as a sensor chip that comprises the one or more sensor elements and electronics configured to evaluate signals measured by the sensor element(s) and to give out a signal that indicates the angular orientation of the magnetic field or of the rotary shaft.

It should be clear that the rotary sensor may comprise plural magnetic field sensors, for example plural Hall-sensors arranged at different positions relative to the magnet arrangement. For example, additionally or alternatively, the rotary sensor may comprise one or more Hall-sensors arranged radially adjacent to the magnet arrangement, for example to measure a radial or tangential component of the magnetic flux density. Such arrangements are similarly suitable for providing an accurate indication of the rotational state or rotational speed of the magnet arrangement and thus of a component to which it is mounted.

The rotary sensor may be a rotation angle sensor configured to detect an angle of rotation of the component and/or a rotational speed sensor configured to detect a rotational speed of the component.

The permanent magnets may be rare-earth magnets, such as Sm₂Co₁₇ magnets.

Preferably, the permanent magnets each have a magnetic remanence of at least 400 mT, preferably at least 600 mT or at least 800 mT. A sufficiently strong magnetic field for detection by the magnetic field sensor may thus be provided.

The magnet arrangement may be configured to provide an axial component of a magnetic flux density (Bz) of at least 10 mT, preferably at least 12 mT or at least 15 mT at a position in a plane perpendicular to the axial direction, wherein the plane is spaced apart from the magnet arrangement in axial direction by at least 1 mm or at least 2 mm. It should be clear that at other positions of the plane, the magnetic flux density may be higher or may be lower; however, it must achieve in the plane at least the defined minimum magnetic flux density. By such configuration, it may be ensured that the magnetic flux density is sufficiently high so that an accurate measurement of the rotation of the magnet field can be achieved even in the presence of disturbing external magnetic fields.

The plane may in particular be a plane in which the magnetic field sensor is arranged, in particular a sensor element of the Hall-sensor (such as sensitive semiconductor slab of the Hall-sensor). The magnetic flux density is generally designated as the B-field and is measured in Tesla (T).

The rotary sensor may further comprise a housing configured to house the at least four permanent magnets. The housing may be configured to be mounted to the component in a non-rotatable manner. Such housing may accordingly fix the relative positioning of the permanent magnets relative to each other and may further fix their positioning with respect to the component. A stable, reliable and reproducible magnetic field may thereby be provided in the rotary sensor.

The housing may comprise a recess configured to receive a shaft of the component. To fix the housing to the shaft, the shaft may be received in the housing and the shaft may have opening into which a pin is mounted, e.g. screwed or pressed, wherein the pin secures the housing on the shaft, e.g. via a head of the pin. The housing may include a recess configured to receive such head of the pin. A compact configuration may thereby be achieved.

The housing may additionally or alternatively comprise a support member for each permanent magnet. The support member may be configured to hold the respective permanent magnet. The support member may hold the permanent magnet by clamping, by using an interference fit, and/or the housing may have a cover configured to close the housing after insertion of the permanent magnets into the respective support members in order to secure the permanent magnets within the housing.

The housing may additionally or alternatively comprise an interlocking feature configured to receive a complementary interlocking feature of the component in a form-fitting manner, e.g. to mitigate or prevent a rotation of the housing with respect to the shaft or component. For example, the interlocking feature of the shaft may be a shaft end having a non-circular shape, and the interlocking feature of the housing may include a recess having a shape that is complementary to the shape of the end of the shaft to enable the engagement of the shaft and the housing in a form-fitting manner. Preferably, the recess is formed by a central cut-away section of the housing that exposes lateral side walls of the at least four permanent magnets, and the end of the shaft may be formed to engage the cut-away section in a form fitting manner; it may in particular be configured to abut the respective side wall sections of the at least four permanent magnets. The interlocking features may alternatively be configured as a slot and key arrangement, e.g. for a circular shaft or shaft end. A compact configuration which at the same time provides protection against relative rotation may thus be achieved. Other ways of non-rotatably mounting the magnet arrangement to the shaft are certainly conceivable, such as a pin configured to engage the shaft, a clamping member, gluing, soldering, welding or the like.

In an embodiment, compared to a ring magnet having an outer diameter and an inner diameter (measured perpendicular to the rotation axis) of the same size as an outer circle and an inner circle that abut an outer perimeter and an inner perimeter of each of the permanent magnets of the magnet arrangement, respectively, an angular deviation of a measurement by the rotary sensor caused by a radial displacement (with respect to the rotational axis) of the magnetic sensor element may be at least 15%, preferably at least 25%, 35%, or 45%, lower than an angular deviation of a measurement caused by a respective radial displacement of a rotary sensor comprising such ring magnet and the same or a similar magnetic sensor element. The reduction may for example be achieved at a radial displacement of 10% of the diameter of the permanent magnets (e.g., at 0.3 mm for permanent magnets of 3 mm diameter). The configuration of the rotary sensor may thus reduce such deviation of an angular measurement significantly. Measurement accuracy may thereby be improved, in particular in harsh environments in which the rotary sensor is exposed to vibration, thermal cycling, or other environmental influences that may have a negative impact on measuring accuracy and that may, in conventional sensors, for example result in sensor drift.

The component, and in particular the shaft, may form part of the rotary sensor.

According to the invention, an operating device for a mobile machine is provided, wherein the operating device comprises a pivotable handle and a detection mechanism coupled to the pivotable handle. The detection mechanism comprises a component that is rotated about an axis upon pivoting the handle. The operating device further comprises a rotary sensor having any of the configurations described herein. The magnet arrangement of the rotary sensor is mounted to the component of the operating device detect a rotation of the component. A reliable and precise control of the machine may be enabled by such operating device. Further, by employing detection of the orientation of the magnetic field, and thus a contactless measurement, the operating device can be made durable and well suited for use in harsh environments. The operating device may for example be a joystick control device.

The operating device may have a suspension that rotates about the axis about which the handle pivots, and the component may be mounted to or may form part of such suspension. For example, the handle may be mounted by a gimbal mount, and the component may be mounted to or may form part of a respective gimbal. Thus, by mounting the magnet arrangement directly or indirectly to such gimbal, a precise detection of the degree of pivoting of the handle becomes possible. It should be clear that such operating device may comprise plural respective rotary sensors, e.g. one or two for each direction of pivoting/rotation.

According to a further embodiment of the present invention, a method of assembling a rotary sensor is provided. The method comprises providing a magnet arrangement configured to generate a magnetic field, wherein the magnet arrangement comprises at least four distinct and seatially separate permanent magnets. wherein the at least four permanent magnets are arranged circumferentially about a rotation axis extending in an axial direction, and wherein the magnet arrangement is configured to be non-rotatably mounted to a component a rotation of which about the rotational axis is to be measured. The method may further comprise arranging at least one magnetic field sensor adjacent to the magnet arrangement to detect a rotation of the magnetic field generated by the magnet arrangement upon rotation of the magnet arrangement. By such method, advantages similar to the ones outlined further above may be achieved.

The method may further comprise mounting the magnet arrangement non-rotatably to the component, e.g. to a rotatable shaft thereof that extends in the axial direction. The rotary sensor may thus be enabled to provide a precise measurement of the component's angular position and/or rotational speed.

The method may comprise further steps for assembling a rotary sensor having any of the configurations described herein. Furthermore, the rotary sensor may be assembled by any of the methods disclosed herein.

It is to be understood that the features mentioned above and those yet to be explained below can be used not only in the respective combinations indicated, but also in other combinations or in isolation, without leaving the scope of the present invention. In particular, the features of the different aspects and embodiments of the invention can be combined with each other unless noted to the contrary.

### BRIEF DESCRIPTION OF THE DRAWINGS

The foregoing and other features and advantages of the invention will become further apparent from the following detailed description read in conjunction with the accompanying drawings. In the drawings, like reference numerals refer to like elements.
Fig. 1 is a schematic drawing showing a top view of a magnet arrangement of a rotary sensor according to an embodiment.
Fig. 2 is a schematic drawing showing a perspective view of a magnet arrangement of a rotary sensor according to an embodiment.
Fig. 3 is a diagram schematically illustrating an angular deviation in dependence on a radial displacement of a magnetic field sensor.
Fig. 4 is a diagram schematically illustrating an angular deviation in dependence on a spacing between permanent magnets for different radial displacements of a magnetic field sensor.
Fig. 5 is a schematic drawing showing a perspective view of a housing of a magnet arrangement of a rotary sensor according to an embodiment.
Fig. 6 is a schematic drawing showing a perspective view of a housing of a magnet arrangement of a rotary sensor according to an embodiment.
Fig. 7 is a schematic drawing showing a sectional view of a rotary sensor according to an embodiment.
Fig. 8 is a flow diagram illustrating a method of assembling a rotary sensor according to an embodiment.

### DETAILED DESCRIPTION

In the following, embodiments of the invention will be described in detail with reference to the accompanying drawings. It is to be understood that the following description of the embodiments is given only for the purpose of illustration and is not to be taken in a limiting sense. It should be noted that the drawings are to be regarded as being schematic representations only, and elements in the drawings are not necessarily to scale with each other. Rather, the representation of the various elements is chosen such that their function and general purpose become apparent to a person skilled in the art. As used herein, the singular forms "a," "an," and "the" are intended to include the plural forms as well, unless the context clearly indicates otherwise. The terms "comprising," "having," "including," and "containing" are to be construed as openended terms (i.e., meaning "including, but not limited to,") unless otherwise noted.

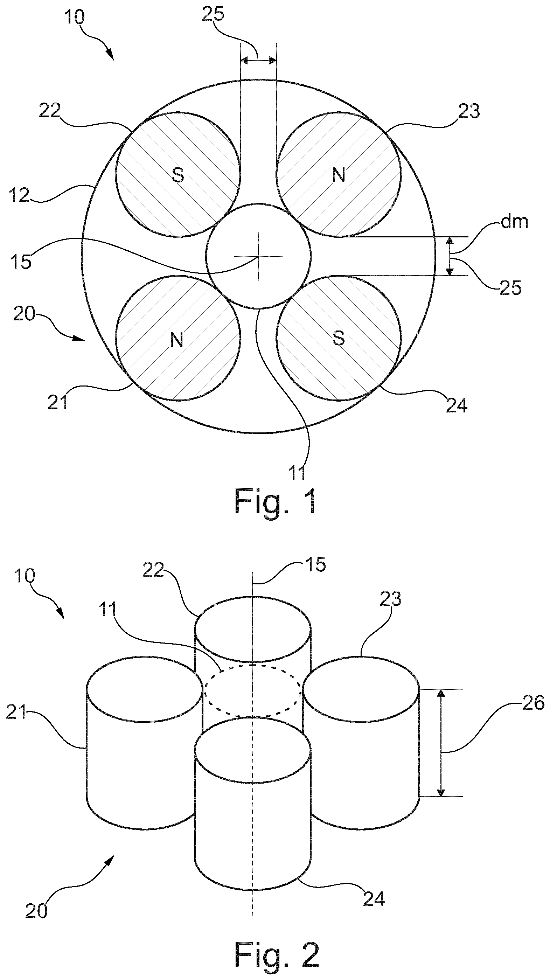

Fig. 1 schematically illustrates a rotary sensor 10 including a magnet arrangement 20 that is configured to generate a magnetic field. The magnet arrangement 20 comprises four permanent magnets 21, 22, 23, and 24, which are arranged circumferentially around the rotation axis 15. Axis 15 extends in an axial direction perpendicular to the drawing plane. The magnet arrangement 20 is configured to be mounted to a rotating component, such as a rotating shaft, which rotates together with the magnet arrangement about the rotation axis 15. The magnet arrangement is rotationally symmetric with respect to rotation axis 15.

In the embodiment of Fig. 1, the magnetization of the permanent magnets 21 to 24 is parallel to the axial direction of the axis 15. The direction of magnetization alternates between neighboring permanent magnets. On the axial end face of the magnet arrangement 20 shown in Fig. 1, the permanent magnets 21, 23 present a north pole at their respective axial end, whereas the permanent magnets 22, 24 present a south pole at their respective axial end. On the opposing end face of the magnet arrangement 20, the magnetic poles have naturally the opposite polarity, meaning that permanent magnets 21, 23 present a south pole, whereas permanent magnets 22 and 24 present a north pole. The magnet arrangement 20 thus has four pole pairs and presents four magnetic poles on each end face. By using such magnet arrangement 20 for detecting a rotation about the axis 15, homogeneous and inhomogeneous external magnetic fields can be compensated by using a magnetic field sensor comprising plural sensor elements.

As illustrated in Fig. 1, the permanent magnets 21 to 24 are preferably spaced apart from each other. The spacing 25 between neighboring permanent magnets is illustrated in Fig. 1 and is the same for each pair of neighboring permanent magnets. An equal spacing is preferred to maintain symmetry of the generated magnetic field. The permanent magnets 21 to 24 further have the same shape and size. In the present example, they have a cylindrical shape, as also shown in Fig. 2. In the top view of Fig. 1, they accordingly have a circular end face.

The periphery, or outer edge, of the permanent magnets 21 to 24 abuts the inner circle 11. The permanent magnets 21 to 24 are thus equally spaced apart from the central axis 15. Further, the perimeter of the permanent magnets 21 to 24 abuts the outer circle 12, in particular as the permanent magnets have the same size, in particular the same diameter. In a plane perpendicular to the rotation axis 15, as shown in Fig. 1, the permanent magnets 21 to 24 are thus arranged within an annular surface bounded by the inner circle 11 and the outer circle 12. These dimensions may be employed for a comparison with a corresponding ring-shaped magnet having a respective inner and outer diameter 11, 12.

The diameter *di* of the inner circle 11 may for example be less than 4 mm, e.g. less than 3.5 or even less than 3 mm. In the present example, the diameter is *di=*2.5 mm. The diameter *do* of the outer circle 12 may be less than 15 mm, preferably less than 12 mm, or even less than 10 mm. In the present example, it is *do=*8.5 mm. The diameter of the cylindrically shaped permanent magnets is 3 mm. The magnet spacing 25 between neighboring permanent magnets is in the present example *dm=*0.9 mm. As an example, the height 26 (figure 2) of the permanent magnets may also be 3 mm.

Fig. 2 is a perspective view of the magnet arrangement 20 of Fig. 1. As can be seen, the permanent magnets 21 to 24 are distributed circumferentially around the axis 15 and abut the inner circle 11. The figure further illustrates the extension 26 in axial direction of the permanent magnets, i.e. the height of the respective cylindrical shapes. The height 26 may be of a comparable dimension as the diameter of the cylindrical shapes.

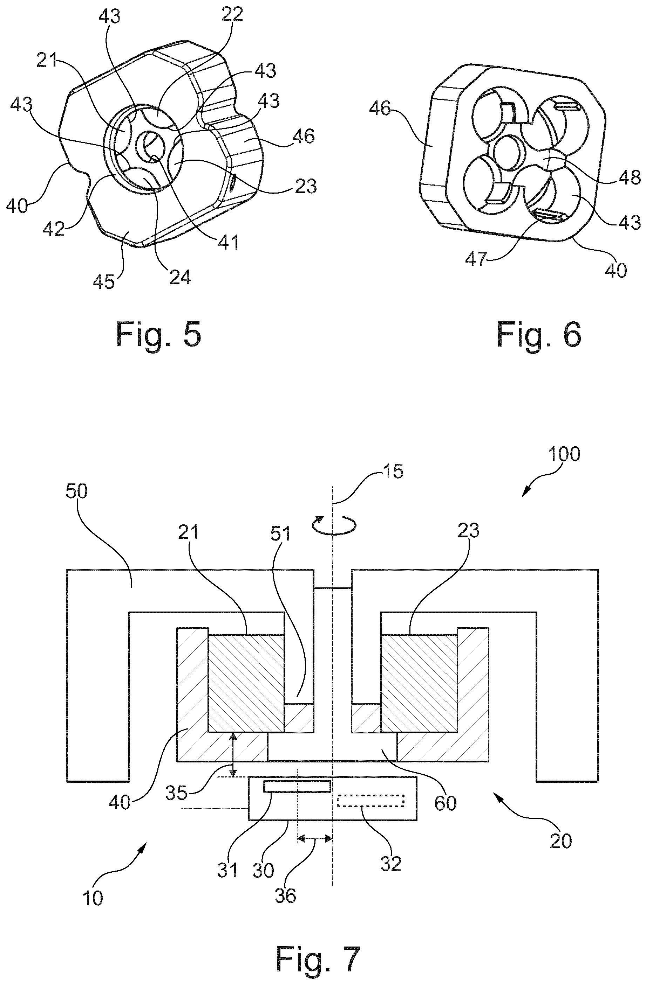

The magnet arrangement 20 is configured to be mounted to a rotatable component, in particular to a rotating shaft, in a non-rotating manner (i.e. it is fixed to the respective shaft). For mounting to the shaft, the magnet arrangement 20 may comprise a housing to support the permanent magnets 21 to 24, as explained in more detail further below with respect to Fig. 5.

Although four permanent magnets 21 to 24 are shown in the embodiments of Figs. 1 and 2, any other even number of permanent magnets may be employed as well, such as six, eight, or more permanent magnets. Further, to tune the magnetic field generated by magnet arrangement 20, it is also conceivable to provide permanent magnets of differing sizes and/or shapes. Further, the permanent magnets do not need to be cylindrical, but may have any desirable shape, such as a polygonal shape, e.g. a rectangular, pentagonal, or other cross-section. Permanent magnets 21 to 24 may for example be rod magnets or bar magnets, with the magnetic poles at the respective axial ends.

Turning briefly to Fig. 7, the rotary sensor 10 further includes a magnetic field sensor 30 that is arranged adjacent to the magnet arrangement 20 and that may be or may comprise a Hall-sensor. The magnetic field sensor 30 is arranged opposite to an axial end face of the magnet arrangement 20 to measure a z-component of the magnetic flux density generated by the magnet arrangement 20, the z-direction being parallel to the rotation axis 15. The magnetic field sensor 30 is spaced apart in axial direction from the magnet arrangement 20 by a distance 35. Magnetic field sensor 30 may comprise one or more Hall-sensor elements 31, 32 to measure the magnetic flux density component Bz and to provide compensation for external homogeneous and inhomogeneous magnetic fields. Sensor element 31 (and optional further sensor elements 32) of magnetic field sensor 30 is radially offset from rotation axis 15 by a distance 36. Respective Hall-sensors comprising one or more sensor elements 31, 32 are commercially available as single chip solutions, and any respective configuration may be employed here.

By measuring the magnetic flux density, and thus the rotation thereof, the magnetic field sensor 30 can provide a precise measurement of the rotation of the magnet arrangement 20 around the axis 15. Such angular measurement may be disturbed by a radial displacement between the magnetic arrangement 20 and the magnetic field sensor 30, i.e. a relative displacement in left/right direction or in a direction perpendicular to the drawing plane. Such displacement may for example occur due to mechanical vibrations of component 50, wear, or other external mechanical influences.

In the above example, a compact configuration can be achieved, since the inner circle 11 can be made small, while the permanent magnets 21 to 24 can still provide a relatively high magnetic field, and in particular a high magnetic flux density Bz in axial direction at the position of the magnetic field sensor 30. Since the permanent magnets can be pre-magnetized prior to their assembly into the magnet arrangement 20, there is no minimum size requirement on the magnet arrangement 20 while a high degree of magnetization can still be ensured. The arrangement illustrated in Figs. 1 and 2 may in particular achieve a magnetic flux density of more than 10 mT at a distance 35 of more than 1 mm.

Furthermore, magnet material may be conserved compared to a corresponding ring magnet. In a ring magnet, the magnetic material needs to be provided in the whole area of the ring-bounded by the inner and outer circles 11, 12. Calculating the volume of the four separate individual permanent magnets 21 to 24 and comparing it to the volume of a ring magnet of the respective size, it turns out that the volume of the four permanent magnets is only 54.6% of the volume of a respective ring magnet. Significant savings in magnetic material may thus be achieved. As noted above, it is however generally not possible to provide a respective ring magnet having the same compactness as the magnet arrangement 20.

The following table compares the volume of magnetic material V_{magnet} and the maximum axial magnetic flux density component Bzₘₐₓ at a radial displacement 36 of *r* = 1.125 mm for the magnet arrangement 20 of Figs. 1 and 2 with differently sized ring magnets, each having a height of 3 mm. The magnetic remanence is *Br* = 930mT for all magnets. As can be seen, compared to conventional ring magnets, the present magnet arrangement 20 provides a relatively high magnetic flux density component Bz at a relatively low volume of magnet material.

**Table 1**

| | Magnet arrangement 20 (4 magnets 3mm x 3 mm) | Ring with *di=*2.5 mm | Ring with *di=*4 mm | Ring with *di=*4 mm | Ring with *di=*4 mm |
|---|---|---|---|---|---|
| | | *do=*8.5 mm | *do=*9 mm | *do=*12 mm | *do=*15 mm |
| Bzₘₐₓ | 17.5 mT | 22.5 mT | 16.6 mT | 19.1mT | 19.7 mT |
| V_{magnet} | 85 mm³ | 157 mm³ | 153 mm³ | 302 mm³ | 492 mm³ |
| Ratio [mT/mm³] | 0.207 | 0.141 | 0.108 | 0.063 | 0.040 |

In particular, it can be seen that the ratio of Bz/V is the largest for the magnet arrangement 20. Compared to the best ring magnet, the reduction of magnet material is thus 32% for the same magnetic field at *r* = 1.125 mm. It is noted that the ring magnet with *di=*2.5 mm may not even be technically feasible, as outlined above.

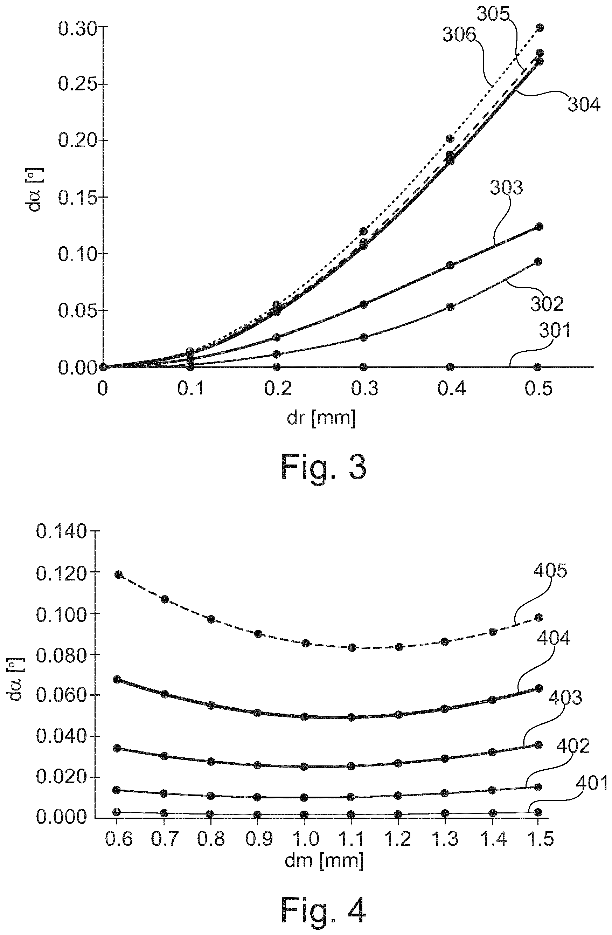

By the magnet arrangement 20, the error in the measurement of the rotation angle (i.e. the angular deviation) that may be caused by the above-mentioned mechanical displacement in radial direction between the magnet arrangement 20 and the magnetic field sensor 30 can be reduced significantly. Such displacement may for example be due to bearing play and/or vibrations. This is illustrated in Fig. 3, which shows the angular deviation *dα* on the vertical axis and shows the mechanical radial displacement *dr* on the horizontal axis. Curve 301 shows that for a perfect 4-pole cylinder magnet, there is almost no angular deviation. Curve 302 illustrates the angular deviation for the magnet arrangement 20 (four permanent magnets of 3 mm diameter and 3 mm height). Curve 303 illustrates the angular deviation for a corresponding ring magnet having an outer diameter of 8.5 mm and an inner diameter of 2.5 mm and a height of 3 mm (thus corresponding to the ring between circles 11 and 12 shown in Fig. 1). The remanence for both, the magnet arrangement 20 and the corresponding ring magnet is *Br =* 930 mT. As can be seen by comparing the curves, the magnet arrangement 20 has a significantly improved reaction to a mechanical displacement in a radial direction *dr* (direction 36 in figure 7) compared to a ring magnet of corresponding size. Using similar dimensions, an improvement by a factor of 2 can be achieved.

Curve 304 corresponds to a ring magnet with outer diameter 15 mm, inner diameter 4 mm and height 3 mm; curve 305 corresponds to a ring magnet of outer diameter 12 mm, inner diameter 4 mm and height 3 mm; and curve 306 corresponds to a ring magnet of outer diameter 9 mm, inner diameter 4 mm, and height 3 mm, all with the same magnetic remanence of 930 mT. Compared to these ring magnets, it can be seen that the reaction to a radial displacement of the magnetic field sensor is even further improved for magnet arrangement 20, e.g. by a factor of 4 or more (for a displacement value *dr =* 0.3 mm). It is noted for a different magnetic remanence of the ring magnets of, e.g., 420 mT, the respective curves lie essentially behind the curves shown in Fig. 3, which illustrates that the magnetic remanence has not much effect on the angular deviation caused by a relative radial displacement of the magnetic field sensor. Ring magnets with an inner diameter of smaller than 4 mm, i.e. corresponding to curve 302, and the required magnetic flux density are difficult to produce as outlined above.

Fig. 4 illustrates the effect of different magnet spacings *dm* on angular displacement. The angular displacement *dα* is shown on the vertical axis. The horizontal axis shows the distance *dm* between adjacent permanent magnets 21-24 in mm, i.e. the distance 25 shown in figure 1. The distance *dm* is the same between each pair or neighboring permanent magnets. Curve 401 corresponds to a displacement of *dr=*0.1 mm; curve 402 to *dr=*0.2 mm; curve 403 to *dr=*0.3 mm; curve 404 to *dr=*0.4 mm; and curve 405 to *dr=0.5* mm. As expected from Fig. 3, for a larger radial displacement *dr,* the angular deviation *dα* increases. As can be seen, the angular deviation *dα* has a minimum at a magnet spacing 25 of about 1.1 mm. This observation allows the optimization of the magnet arrangement and making the rotary sensor more robust against radial displacements.

For Figs. 3 and 4 and for the values indicated above, the radial offset 36 between the axis 15 and the magnetic field sensor 30 has been chosen to *r* = 1.125 mm. It should be clear that in other embodiments, differently sized magnets, a different spacing between magnets, a different distance 35, a different radial offset 36 and differently sized inner and outer circles 11, 12 may be used. The above outlined dimensions are only provided for the purpose of illustrating the benefits achieved by the solution disclosed herein and are not of a limiting nature.

Fig. 5 illustrates a housing 40 that may form part of the rotary sensor 10 and that is provided for taking up the permanent magnets 21 to 24. The housing 40 may comprise a support member 43 for each permanent magnet, which may be provided in form of a sleeve or recess into which the permanent magnet can be inserted in a formfitting manner or may be pressed in. The recess 42 opens the view on the permanent magnets 21 to 24 which are arranged within the respective supports 43. The housing 40 may further comprise an opening 41 configured to receive a pin (60 in Fig. 7) in a formfitting manner. Housing 40 further comprises a circumferential outer wall 46 and an axial end cover 45. End cover 45 secures the permanent magnets 21 to 24 in their respective support 43. Optionally, a corresponding end cover may be provided on the opposite axial end of the housing 40. Housing 40 may be formed of a single integral piece of material. It may be formed by molding and/or machining.

As shown in Fig. 6, the support 43 may comprise a clamping feature, such as a ridge, rib, or protrusion 47 to ensure that when the permanent magnet is pressed into the support 43, the permanent magnet is held firmly in place. Three such ridges or protrusions 47 spaced apart circumferentially by about 120° or another angle may be provided in each support 43.

The housing 40 may be configured to receive a part of the component 50, such as a shaft 51 (figure 7), a protrusion, or the like. Figure 6 illustrates a respective receiving section 48 of housing 40. When the permanent magnets 21-24 are mounted in housing 40, the receiving section 48 has a cross-shaped cross section, which provides an interlocking feature. The shaft 51 may have a complementary shape to provide a corresponding interlocking feature. The cross-shaped end of the shaft thus engages the receiving section 48 in a form-fitting manner. Interlocking is thereby achieved, and the housing 40 is prevented from being rotated relative to the shaft 51. The non-rotatable mount to component 50 may also be achieved in different ways, such as using a slot and key arrangement, using locking pins extending laterally through housing and shaft, using a pin engaging the outer walls of the housing, e.g. the recess shown in the sidewall 46 of figure 5, or the like.

To hold the housing 40 on the shaft 51, a pin 60 may be provided (figure 7) which engages a opening in the shaft. The pin 60 may extend through the hole 41 and may have a head larger than hole 41. The pin may be pressed into or screwed into the end of shaft 51 so that the housing is pressed against the end of the shaft and cannot become disengaged from the shaft. A simple but secure and compact way of mounting housing 40 to shaft 51 may thus be achieved. The housing 40 may have a recess 42 configured to take up the head of a respective pin. The assembly may thus be made even more compact.

Figure 7 illustrates an embodiment of rotary sensor 10 that may be for example be mounted in an operating device 100, e.g. of a mobile machine. Such operating device may include a handle (not shown) to be operated by an operator; it may have a joystick-like configuration. Component 50 forms part of the operating device and is coupled to the handle such that if the handle is actuated, in particular pivoted, the component 50 is rotated about the rotation axis 15. Component 50 can form part of a suspension or can be mounted to such suspension. For example, a gimbal of a gimbal mount may support the handle and may rotate about the axis 15 when the handle is pivoted, and the component 50 may form part of such gimbal or may be mounted to such gimbal.

As explained above, the housing 40 supports the permanent magnets 21-24, two of which are partly visible in the schematic sectional view of figure 7. The section shown in figure 7 does not go through the center of the permanent magnets 21, 23, thus showing a wider section through shaft 51 and through the outer wall 46 of housing 40. The housing 40 is secured by pin 60 to the end of shaft 51. In other implementations, the component 50 may not comprise a shaft, but the housing may directly be mounted to a differently shaped part of component 50, e.g. to the flat disc-shaped part.

The magnetic field sensor 30 includes the Hall sensor element 31, and may include one or more additional Hall sensor elements 32. Hall sensor element 31 is offset by an offset 36 from the axis 15. The offset may be measured to a center of Hall sensor element 31. The Hall sensor element 31 may include a sensor array, which may have the form of a Hall plate circle. The center of such Hall plate circle may form the center of the Hall sensor element 31. The offset may for example be about half the diameter of such Hall plate circle. For example, offset 36 may be between 0.5 and 3 mm, e.g. between 1 and 2 mm (it is r=1.125 in the above examples).

Magnetic field sensor 30 may be provided as a (single) chip, such as a Micronas HAR 3930 type stray field robust Hall sensor. The chip may include two or more hall sensor elements at different positions on the chip.

The magnetic field sensor may be spaced apart from the magnet arrangement 20, in particular from the permanent magnets 21-24, by a distance 35 in axial direction (z-direction). The distance may be measured to the surface of the chip, the distance of the sensor element 31 from the chip surface being generally known. In an exemplary implementation, the distance 35 may be more than 1 mm or more than 2 mm. By the magnet arrangement 20, it can be ensured that the magnetic flux density in axial direction Bz is still sufficiently large at the position of the Hall sensor element 31; the magnet arrangement may in particular be configured to provide at least Bz = 10 mT in the plane perpendicular to the axis 15 in which the Hall sensor element 31 is located. A precise measurement of magnetic field rotation and an efficient compensation of external magnetic fields may thereby be ensured.

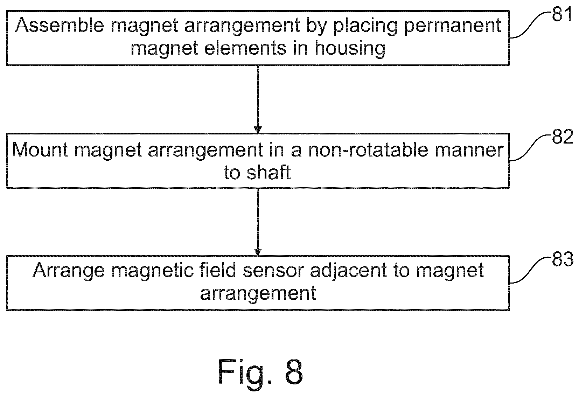

Fig. 8 illustrates a method of assembling a rotary sensor, which may have any of the configurations described herein. In step 81, the magnet arrangement is assembled by placing the permanent magnets 21 to 24 in the housing 40. In step 82, the magnet arrangement is mounted in a non-rotatable manner to the shaft 51 of component 50 (or to another part of the component). In step 83, the magnetic field sensor 30 is arranged adjacent to the magnet arrangement 20. It should be clear that this is only an exemplary implementation of the method, and that the steps may have a different order and that additionally steps may be provided. For example, the rotary sensor 10 may first be assembled as a unit and may then be mounted to the component 50 by attaching the magnet arrangement 20 in a non-rotatable manner to the shaft 51.

While specific embodiments are disclosed herein, various changes and modifications can be made without departing from the scope of the invention. The present embodiments are to be considered in all respects as illustrative and non-restrictive, and all changes coming within the meaning and equivalency range of the appended claims are intended to be embraced therein.

### List of reference signs:

- 10: rotary sensor
- 11: inner circle
- 12: outer circle
- 15: rotation axis
- 20: magnet arrangement
- 21-24: permanent magnets
- 25: spacing between permanent magnets
- 26: height of permanent magnet
- 30: magnetic field sensor
- 31: Hall sensor element
- 32: Hall sensor element
- 35: axial distance between permanent magnets and magnetic field sensor
- 36: radial offset between Hall sensor element and axis of rotation
- 40: housing
- 41: hole
- 42: recess
- 43: support for permanent magnet
- 45: end cover
- 46: side wall
- 47: ridge
- 48: receiving section for shaft
- 50: rotating component
- 51: shaft
- 60: pin
- 100: operating device
- 301-306: curves
- 401-405: curves
- 801-803: method steps

## Claims

1. An operating device for a mobile machine, wherein the operating device comprises a pivotable handle and a detection mechanism coupled to the pivotable handle, the detection mechanism comprising a component (50) that is rotated about a rotation axis (15) upon pivoting the handle, wherein the operating device (100) further comprises a rotary sensor (10), wherein the rotary sensor (10) is a rotation angle sensor configured to detect an angle of rotation of the component (50), wherein the rotary sensor (10) comprises:
- a magnet arrangement (20) configured to generate a magnetic field, wherein the magnet arrangement (20) comprises at least four distinct and spatially separate permanent magnets (21-24), wherein the at least four permanent magnets (21-24) are arranged circumferentially about the rotation axis (15) extending in an axial direction, wherein each permanent magnet (21-24) has a direction of magnetization that is substantially parallel to the axial direction, and wherein at an axial end face of the magnet arrangement (20) north and south poles of the permanent magnets (21-24) alternate in circumferential direction so that in circumferential direction neighboring permanent magnets have an opposite direction of magnetization; and
- at least one magnetic field sensor (30) configured and arranged to detect a rotation of the magnetic field generated by the magnet arrangement (20) upon rotation of the magnet arrangement (20),
wherein the magnet arrangement (20) of the rotary sensor (10) is non-rotatably mounted to the component (50) of the operating device (100) to detect a rotation of the component (50) about the rotation axis.

2. The operating device according to claim 1, wherein the at least four permanent magnets (21-24) are spaced apart from each other in circumferential direction.

3. The operating device according to claim 2, wherein a distance (25) by which the at least four permanent magnets are spaced apart from each other in circumferential direction is less than 6 mm, less than 3 mm, or less than 1.5 mm.

4. The operating device according to any of the preceding claims, wherein each permanent magnet (21-24) has a cylindrical shape, wherein a cylinder axis of the cylindrical shape is substantially parallel to the axial direction.

5. The operating device according to any of the preceding claims, wherein the at least two permanent magnets (21-24) are arranged such that in a cross-sectional plane perpendicular to said axial direction, the perimeter of each of the at least two permanent magnets (21-24) abuts the same inner circle (11).

6. The operating device according to claim 5, wherein the inner circle (11) has a diameter of less than 6 mm, less than 4 mm, less than 3.5 mm, or less than 3 mm.

7. The operating device according to any of the preceding claims, wherein the at least four permanent magnets (21-24) have the same or a similar size and shape, wherein the diameter of each permanent magnet (21-24) is less than 8 mm, less than 5 mm, or less than 4 mm and/or wherein an extension in axial direction of each permanent magnet (21-24) is less than 8 mm, less than 5 mm, or less than 4 mm.

8. The operating device according to any of the preceding claims, wherein the at least one magnetic field sensor (30) is provided in an end-of-shaft configuration.

9. The operating device according to any of the preceding claims, wherein the at least one magnetic field sensor (30) comprises at least one Hall sensor arranged in the axial direction on a side of the magnet arrangement (20) that is opposite to a side on which the magnet arrangement is configured to receive or to be mounted to the component (50), wherein a sensor element, in particular a sensor array, of the Hall sensor is preferably offset from the rotation axis (15) in a radial direction (36) that is perpendicular to the axial direction.

10. The operating device according to any of the preceding claims, wherein the magnet arrangement (20) is configured to provide an axial component of a magnetic flux density (Bz) of at least 10 mT at a position in a plane perpendicular to the axial direction, wherein the plane is spaced apart from the magnet arrangement in axial direction by at least 1 mm or at least 2 mm.

11. The operating device according to any of the preceding claims, further comprising a housing (40) configured to house the at least two permanent magnets (21-24), the housing (40) being mounted to the component (50) in a nonrotatable manner.

12. The operating device according to claim 11, wherein the housing (40) further comprises a recess (48) to receive a shaft (51) of the component (50) and/or comprises a support member (43) for each permanent magnet (21-24), the support member (43) being configured to hold the respective permanent magnet.

13. The operating device according to claim 11 or 12, wherein the housing (40) further comprises an interlocking feature (48) configured to receive a complementary interlocking feature of the component (50) in a form-fitting manner to mitigate or prevent a rotation of the housing (40) with respect to the component (50).

14. A method of assembling a rotary sensor on an operating device for a mobile machine, wherein the operating device comprises a pivotable handle and a detection mechanism coupled to the pivotable handle, the detection mechanism comprising a component (50) that is rotated about a rotation axis (15) upon pivoting the handle, the method comprising:
- providing a magnet arrangement (20) of the rotary sensor (10), the magnet arrangement (20) being configured to generate a magnetic field, wherein the magnet arrangement (20) comprises at least four distinct and spatially separate permanent magnets (21-24), wherein the at least four permanent magnets (21-24) are arranged circumferentially about the rotation axis (15) extending in an axial direction, wherein each permanent magnet (21-24) has a direction of magnetization that is substantially parallel to the axial direction, and wherein at an axial end face of the magnet arrangement (20) north and south poles of the permanent magnets (21-24) alternate in circumferential direction so that in circumferential direction neighboring permanent magnets have an opposite direction of magnetization;
- mounting the magnet arrangement (20) of the rotary sensor (10) non-rotatably to the component (50) the rotation of which about the rotational axis is to be measured; and
- arranging at least one magnetic field sensor (30) adjacent to the magnet arrangement (20) to detect a rotation of the magnetic field generated by the magnet arrangement (20) upon rotation of the magnet arrangement (20).

## Patentansprüche

1. Bedienvorrichtung für eine mobile Maschine, wobei die Bedienvorrichtung einen schwenkbaren Griff und einen mit dem schwenkbaren Griff gekoppelten Erkennungsmechanismus umfasst, wobei der Erkennungsmechanismus eine Komponente (50) umfasst, die beim Schwenken des Griffs um eine Drehachse (15) gedreht wird, wobei die Bedienvorrichtung (100) ferner einen Drehsensor (10) umfasst, wobei der Drehsensor (10) ein Drehwinkelsensor ist, der konfiguriert ist, um einen Drehwinkel der Komponente (50) zu erkennen, wobei der Drehsensor (10) umfasst:
- eine Magnetanordnung (20), die konfiguriert ist, um ein Magnetfeld zu erzeugen, wobei die Magnetanordnung (20) mindestens vier verschiedene und räumlich getrennte Permanentmagnete (21-24) umfasst, wobei die mindestens vier Permanentmagnete (21-24) umfänglich um die sich in axialer Richtung erstreckende Drehachse (15) angeordnet sind, wobei jeder Permanentmagnet (21-24) eine Magnetisierungsrichtung aufweist, die im Wesentlichen parallel zur axialen Richtung ist, und wobei sich an einer axialen Endfläche der Magnetanordnung (20) Nord- und Südpole der Permanentmagnete (21-24) in Umfangsrichtung abwechseln, sodass in Umfangsrichtung benachbarte Permanentmagnete eine entgegengesetzte Magnetisierungsrichtung aufweisen, und
- mindestens einen Magnetfeldsensor (30), der konfiguriert und angeordnet ist, um eine Drehung des von der Magnetanordnung (20) erzeugten Magnetfelds bei Drehung der Magnetanordnung (20) zu erkennen,
wobei die Magnetanordnung (20) des Drehsensors (10) drehfest an der Komponente (50) der Bedienvorrichtung (100) angebracht ist, um eine Drehung der Komponente (50) um die Drehachse zu erkennen.

2. Bedienvorrichtung nach Anspruch 1, wobei die mindestens vier Permanentmagnete (21-24) in Umfangsrichtung voneinander beabstandet sind.

3. Bedienvorrichtung nach Anspruch 2, wobei ein Abstand (25), um den die mindestens vier Permanentmagnete in Umfangsrichtung voneinander beabstandet sind, kleiner als 6 mm, kleiner als 3 mm oder kleiner als 1,5 mm ist.

4. Bedienvorrichtung nach einem der vorhergehenden Ansprüche, wobei jeder Permanentmagnet (21-24) eine zylindrische Form aufweist, wobei eine Zylinderachse der zylindrischen Form im Wesentlichen parallel zur axialen Richtung ist.

5. Bedienvorrichtung nach einem der vorhergehenden Ansprüche, wobei die mindestens zwei Permanentmagnete (21-24) so angeordnet sind, dass in einer Querschnittsebene senkrecht zur axialen Richtung der Umfang jedes der mindestens zwei Permanentmagnete (21-24) an denselben inneren Kreis (11) grenzt.

6. Bedienvorrichtung nach Anspruch 5, wobei der innere Kreis (11) einen Durchmesser von weniger als 6 mm, weniger als 4 mm, weniger als 3,5 mm oder weniger als 3 mm aufweist.

7. Bedienvorrichtung nach einem der vorhergehenden Ansprüche, wobei die mindestens vier Permanentmagnete (21-24) die gleiche oder eine ähnliche Größe und Form aufweisen, wobei der Durchmesser jedes Permanentmagneten (21-24) kleiner als 8 mm, kleiner als 5 mm oder kleiner als 4 mm ist und/oder wobei eine Ausdehnung in axialer Richtung jedes Permanentmagneten (21-24) kleiner als 8 mm, kleiner als 5 mm oder kleiner als 4 mm ist.

8. Bedienvorrichtung nach einem der vorhergehenden Ansprüche, wobei der mindestens eine Magnetfeldsensor (30) in einer Wellenendekonfiguration bereitgestellt ist.

9. Bedienvorrichtung nach einem der vorhergehenden Ansprüche, wobei der mindestens eine Magnetfeldsensor (30) mindestens einen Hall-Sensor umfasst, der in axialer Richtung auf einer Seite der Magnetanordnung (20) angeordnet ist, die einer Seite gegenüberliegt, auf der die Magnetanordnung konfiguriert ist, um die Komponente (50) aufzunehmen oder an dieser angebracht zu werden, wobei ein Sensorelement, insbesondere ein Sensorarray, des Hall-Sensors vorzugsweise in einer radialen Richtung (36), die senkrecht zur axialen Richtung steht, von der Drehachse (15) versetzt ist.

10. Bedienvorrichtung nach einem der vorhergehenden Ansprüche, wobei die Magnetanordnung (20) konfiguriert ist, um eine axiale Komponente einer magnetischen Flussdichte (Bz) von mindestens 10 mT an einer Position in einer Ebene senkrecht zur axialen Richtung bereitzustellen, wobei die Ebene in axialer Richtung mindestens 1 mm oder mindestens 2 mm von der Magnetanordnung beabstandet ist.

11. Bedienvorrichtung nach einem der vorhergehenden Ansprüche, ferner umfassend ein Gehäuse (40), das konfiguriert ist, um die mindestens zwei Permanentmagnete (21-24) aufzunehmen, wobei das Gehäuse (40) drehfest an der Komponente (50) angebracht ist.

12. Bedienvorrichtung nach Anspruch 11, wobei das Gehäuse (40) ferner eine Aussparung (48) zur Aufnahme einer Welle (51) der Komponente (50) und/oder ein Trägerelement (43) für jeden Permanentmagneten (21-24) umfasst, wobei das Trägerelement (43) konfiguriert ist, um den jeweiligen Permanentmagneten zu halten.

13. Bedienvorrichtung nach Anspruch 11 oder 12, wobei das Gehäuse (40) ferner ein Verriegelungsmerkmal (48) umfasst, das konfiguriert ist, um ein komplementäres Verriegelungsmerkmal der Komponente (50) formschlüssig aufzunehmen, um eine Drehung des Gehäuses (40) in Bezug auf die Komponente (50) zu mildern oder zu verhindern.

14. Verfahren zum Montieren eines Drehsensors an einer Bedienvorrichtung für eine mobile Maschine, wobei die Bedienvorrichtung einen schwenkbaren Griff und einen mit dem schwenkbaren Griff gekoppelten Erkennungsmechanismus umfasst, wobei der Erkennungsmechanismus eine Komponente (50) umfasst, die beim Schwenken des Griffs um eine Drehachse (15) gedreht wird, wobei das Verfahren umfasst:
- Bereitstellen einer Magnetanordnung (20) des Drehsensors (10), wobei die Magnetanordnung (20) konfiguriert ist, um ein Magnetfeld zu erzeugen, wobei die Magnetanordnung (20) mindestens vier verschiedene und räumlich getrennte Permanentmagnete (21-24) umfasst, wobei die mindestens vier Permanentmagnete (21-24) umfänglich um die sich in axialer Richtung erstreckende Drehachse (15) angeordnet sind, wobei jeder Permanentmagnet (21-24) eine Magnetisierungsrichtung aufweist, die im Wesentlichen parallel zur axialen Richtung ist, und wobei sich an einer axialen Endfläche der Magnetanordnung (20) Nord- und Südpole der Permanentmagnete (21-24) in Umfangsrichtung abwechseln, sodass in Umfangsrichtung benachbarte Permanentmagnete eine entgegengesetzte Magnetisierungsrichtung aufweisen;
- Anbringen der Magnetanordnung (20) des Drehsensors (10) drehfest an der Komponente (50), deren Drehung um die Drehachse gemessen werden soll; und
- Anordnen mindestens eines Magnetfeldsensors (30) benachbart zur Magnetanordnung (20), um eine Drehung des von der Magnetanordnung (20) erzeugten Magnetfelds bei Drehung der Magnetanordnung (20) zu erkennen.

## Revendications

1. Dispositif de commande pour une machine mobile, dans lequel le dispositif de commande comprend une poignée pivotante et un mécanisme de détection accouplé à la poignée pivotante, le mécanisme de détection comprenant un composant (50) qui est tourné autour d'un axe de rotation (15) lors du pivotement de la poignée, dans lequel le dispositif de commande (100) comprend en outre un capteur rotatif (10), dans lequel le capteur rotatif (10) est un capteur d'angle de rotation configuré pour détecter un angle de rotation du composant (50), dans lequel le capteur rotatif (10) comprend :
- un agencement d'aimants (20) conçu pour générer un champ magnétique, dans lequel l'agencement d'aimants (20) comprend au moins quatre aimants permanents (21-24) distincts et séparés dans l'espace, dans lequel les au moins quatre aimants permanents (21-24) sont disposés de manière circonférentielle autour de l'axe de rotation (15) s'étendant dans une direction axiale, dans lequel chaque aimant permanent (21-24) a une direction de magnétisation sensiblement parallèle à la direction axiale, et dans lequel au niveau d'une face d'extrémité axiale de l'agencement d'aimants (20) les pôles nord et sud des aimants permanents (21-24) alternent dans la direction circonférentielle de sorte que dans la direction circonférentielle les aimants permanents voisins ont une direction de magnétisation opposée ; et
- au moins un capteur de champ magnétique (30) configuré et agencé pour détecter une rotation du champ magnétique généré par l'agencement d'aimants (20) lors de la rotation de l'agencement d'aimants (20),
dans lequel l'agencement d'aimants (20) du capteur rotatif (10) est monté de manière non rotative sur le composant (50) du dispositif de commande (100) afin de détecter une rotation du composant (50) autour de l'axe de rotation.

2. Dispositif de commande selon la revendication 1, dans lequel les au moins quatre aimants permanents (21-24) sont espacés les uns des autres dans une direction circonférentielle.

3. Dispositif de commande selon la revendication 2, dans lequel une distance (25) entre les au moins quatre aimants permanents dans la direction circonférentielle est inférieure à 6 mm, inférieure à 3 mm ou inférieure à 1,5 mm.

4. Dispositif de commande selon l'une quelconque des revendications précédentes, dans lequel chaque aimant permanent (21-24) a une forme cylindrique, dans lequel un axe de cylindre de la forme cylindrique est sensiblement parallèle à la direction axiale.

5. Dispositif de commande selon l'une quelconque des revendications précédentes, dans lequel les au moins deux aimants permanents (21-24) sont disposés de telle sorte que, dans un plan de coupe perpendiculaire à ladite direction axiale, le périmètre de chacun des au moins deux aimants permanents (21-24) aboute au même cercle intérieur (11).

6. Dispositif de commande selon la revendication 5, dans lequel le cercle intérieur (11) a un diamètre inférieur à 6 mm, inférieur à 4 mm, inférieur à 3,5 mm ou inférieur à 3 mm.

7. Dispositif de commande selon l'une quelconque des revendications précédentes, dans lequel les au moins quatre aimants permanents (21-24) ont une taille et une forme identiques ou similaires, dans lequel le diamètre de chaque aimant permanent (21-24) est inférieur à 8 mm, inférieur à 5 mm, ou inférieur à 4 mm et/ou dans lequel une extension dans la direction axiale de chaque aimant permanent (21-24) est inférieure à 8 mm, inférieure à 5 mm, ou inférieure à 4 mm.

8. Dispositif de commande selon l'une quelconque des revendications précédentes, dans lequel l'au moins un capteur de champ magnétique (30) est fourni dans une configuration en bout d'arbre.

9. Dispositif de commande selon l'une quelconque des revendications précédentes, dans lequel l'au moins un capteur de champ magnétique (30) comprend au moins un capteur Hall disposé dans la direction axiale sur un côté de l'agencement d'aimants (20) qui est opposé à un côté sur lequel l'agencement d'aimants est conçu pour recevoir ou être monté sur le composant (50), dans lequel un élément de capteur, en particulier un réseau de capteurs, du capteur Hall est de préférence décalé par rapport à l'axe de rotation (15) dans une direction radiale (36) perpendiculaire à la direction axiale.

10. Dispositif de commande selon l'une quelconque des revendications précédentes, dans lequel l'agencement d'aimants (20) est conçu pour fournir une composante axiale d'une densité de flux magnétique (Bz) d'au moins 10 mT au niveau d'une position sur un plan perpendiculaire à la direction axiale, dans lequel le plan est espacé de l'agencement d'aimants dans la direction axiale d'au moins 1 mm ou d'au moins 2 mm.

11. Dispositif de commande selon l'une quelconque des revendications précédentes, comprenant en outre un boîtier (40) conçu pour loger les au moins deux aimants permanents (21-24), le boîtier (40) étant monté sur le composant (50) de manière non rotative.

12. Dispositif de commande selon la revendication 11, dans lequel le boîtier (40) comprend en outre un évidement (48) pour recevoir un arbre (51) du composant (50) et/ou comprend un élément de support (43) pour chaque aimant permanent (21-24), l'élément de support (43) étant conçu pour maintenir l'aimant permanent respectif.

13. Dispositif de commande selon la revendication 11 ou 12, dans lequel le boîtier (40) comprend en outre une caractéristique de verrouillage (48) conçue pour recevoir une caractéristique de verrouillage complémentaire du composant (50) d'une manière adaptée à la forme pour atténuer ou empêcher une rotation du boîtier (40) par rapport au composant (50).

14. Procédé d'assemblage d'un capteur rotatif sur un dispositif de commande pour une machine mobile, dans lequel le dispositif de commande comprend une poignée pivotante et un mécanisme de détection accouplé à la poignée pivotante, le mécanisme de détection comprenant un composant (50) qui est tourné autour d'un axe de rotation (15) lors du pivotement de la poignée, le procédé comprenant :
- la fourniture d'un agencement d'aimants (20) du capteur rotatif (10), l'agencement d'aimants (20) étant conçu pour générer un champ magnétique, dans lequel l'agencement d'aimants (20) comprend au moins quatre aimants permanents (21-24) distincts et séparés dans l'espace, dans lequel les au moins quatre aimants permanents (21-24) sont disposés de manière circonférentielle autour de l'axe de rotation (15) qui s'étend dans une direction axiale, dans lequel chaque aimant permanent (21-24) a une direction de magnétisation sensiblement parallèle à la direction axiale, et dans lequel au niveau d'une face d'extrémité axiale de l'agencement d'aimants (20) les pôles nord et sud des aimants permanents (21-24) alternent dans la direction circonférentielle de sorte que dans la direction circonférentielle les aimants permanents voisins ont une direction de magnétisation opposée ;
- le montage de l'agencement d'aimants (20) du capteur rotatif (10) de manière non rotative sur le composant (50) dont la rotation autour de l'axe de rotation doit être mesurée ; et
- l'agencement d'au moins un capteur de champ magnétique (30) adjacent à l'agencement d'aimants (20) pour détecter une rotation du champ magnétique généré par l'agencement d'aimants (20) lors de la rotation de l'agencement d'aimants (20).
